# EUROPEAN PATENT SPECIFICATION

(11) **EP 0 793 045 B1**
(45) Date of publication and mention of the grant of the patent: **19.04.2000**
(21) Application number: 97300936.8
(22) Date of filing: 13.02.1997
(51) Int. Cl.: F16L 11/112

(54) **Composite tube with a convoluted cove**
Verbundrohr mit einem gewickelten Kern
Tuyau composite avec un noyau ondulé

(30) Priority: 23.02.1996 GB 9603827
(43) Date of publication of application: 03.09.1997
(73) Proprietor: Guest, John Derek, Maidenhead, Berkshire SL6 2RX (GB)
(72) Inventor: Guest, John Derek, Maidenhead, Berkshire SL6 2RX (GB)
(74) Representative: Bayliss, Geoffrey Cyril

(56) References cited:
- EP-A- 0 616 160
- US-A- 3 872 893
- US-A- 5 129 429

## Description

This invention relates to composite tubing which can readily be bent to a required shape or profile.

Various forms of convoluted tubing are known for different applications. In particular tubing is convoluted to allow for greater flexibility without kinking. In addition plastics tubing having appropriate inner and outer layers is known especially in applications where different characteristics are required for the inner and outer layers of the tube.

EP-A-0616160, which is considered to be the closest prior art, discloses a composite tubing comprising a convoluted tubular core having coextruded inner and outer plastics layers providing a composite tube having a smooth inner bore and a smooth outer surface.

US-A-5,129,429 discloses a flexible hose construction comprising an inner corrugated hose made of polymeric material and having a plurality of outwardly facing convex projections with outwardly facing recesses therebetween. The inner hose has a plurality of inwardly facing convex projections with inwardly facing recesses therebetween. An outer sleeve of reinforcing material is disposed in telescoping relation on the inner hose, a first tube of polymeric material is disposed between the sleeve of reinforcing material and the inner hose and having an inner peripheral surface engaging the outwardly facing convex projections in a generally straight line manner from one end thereof to the other to prevent the sleeve of reinforcing material from entering the outwardly facing recesses of the hose to an amount which would tend to substantially reduce the flexibility characteristics of the inner hose. A second tube of polymeric material is disposed inside the inner hose and has an outer peripheral surface engaging the inwardly facing convex projections in a generally straight line manner from one end to the other.

US-A-3,872,893 discloses a hose of all plastic multi-layer construction having a reinforcement material which is flexible and stiff under normal working conditions and which has a flow temperature less than the flow temperature of the cover and inner layers of the hose and which forms spaced reinforcing elements for the hose.

This invention provides a three-part composite tubing having a smooth inner bore and a smooth outer surface comprising a tubular core, the core having external circumferential grooves and having co-extruded inner and outer plastic layers the outer layer filling the grooves on the outer side of the core to provide the smooth inner bore and a smooth outer surface;
characterised in that the core is formed with circumferential convolutions providing grooves alternately on the inner and outer sides of the core, in that the inner layer fills the grooves on the inner side of the core to provide the smooth inner bore and in that the core is formed from a metal or plastics which is relatively stiff in relation to the plastic layers and which takes a permanent set when bent so that bending the resulting composite tubing containing the core results in the tubing taking a permanent set.

By way of example, the convolutions encircling the tube may be of generally square profile having rounded inner and outer corners.

The following is a description of some specific embodiments of the invention, reference being made to the accompanying drawings, in which :
Figure 1 is a cross-sectional view through a length of coextruded tube having inner and outer layers in accordance with the present invention; and
Figure 2 is a cross-sectional view througn the tubing of Figure 1 with the inner layer cut away over part of the length and the outer layer cut away over the remainder.

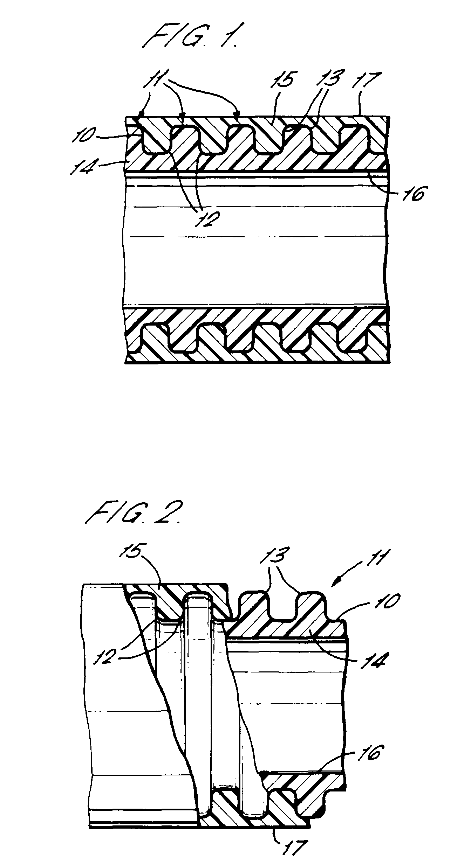

Referring firstly to Figure 1 of the drawings, there is shown a three part composite tube comprising an inner metal or polymeric core 10 formed with circumferential convolutions 11 at spaced locations throughout the length of the core. The convolutions are of a generally square form with rounded inner and outer corners indicated at 12 and 13 respectfully.

The core is coated on its inner and outer surfaces with layers of polymer material 14, 15 which are co-extruded onto the core in a single extruding operation to form a composite tube having a smooth inner bore 16 and a smooth outer surface 17.

The inner convoluted tubular core is relatively stiff in relation to the polymeric layers but when flexed, adopts a permanent set. Thus the composite tubing can be bent to a required radius or other shape and the inner core will hold the tubing in that shape. The inner core may be formed from polymeric materials of the required stiffness and flexibility.

Metal/plastic combination tubes already exist in certain applications. They offer a range of advantages : greater mechanical strength/stiffness; lower thermal expansion; constant stiffness over a working temperature range; reduced or eliminated permeations; and fire resistance. Also the petal layer overcomes the plastics "memory" and allows the tube to be more readily formed to the required shape.

Convoluted tubes in plastic and metal already exist. They offer greater flexibility without kinking, etc.

The present invention combines a convoluted tubular core with coextruded inner and outer layers of polymeric material applied to the core. The resulting composite tubing has the following advantages :
- Convoluted tube but with smooth inside and outside diameters allowing conventional sealing, etc.
- Plastic tube can be tailored by varying the internal convolution formed to have optimal mechanical properties in terms of stiffness but without sacrificing cost and weight through excessive use of material.
- Convoluted layer allows tube to be easily cut (due to thinner metal) but reduces distortion of tube end due to flattening during cutting and use.
- Convolution can also act as a guide to help ensure cut end of the tube is square with its axis.
- Convoluted layer can also be made of plastics.

## Claims

1. A three-part composite tubing having a smooth inner bore (16) and a smooth outer surface (17) comprising a tubular core (10), the core having external circumferential grooves and having co-extruded inner and outer plastics layers (14,15) the outer layer (15) filling the grooves on the outer side of the core to provide the smooth inner bore and a smooth outer surface; characterised in that the core is formed with circumferential convolutions (11) providing grooves alternately on the inner and outer sides of the core, in that the inner layer fills the grooves on the inner side of the core to provide the smooth inner bore and in that the core (10) is formed from a metal or plastics which is relatively stiff in relation to the plastic layers and which takes a permanent set when bent so that bending the resulting composite tubing containing the core results in the tubing taking a permanent set.

2. A composite tubing as claimed in claim 1, characterised in that the convolutions (11) encircling the tube are of generally square profile having rounded inner and outer corners (12,13).

## Patentansprüche

1. Dreiteiliges Verbundrohr mit einer glatten Innenöffnung (16) und einer glatten Außenoberfläche (17), umfassend einen rohrförmigen Kern (10), wobei der Kern äußere in Umfangsrichtung verlaufende Vertiefungen aufweist und koextrudierte innere und äußere Kunststoffschichten (14, 15) aufweist, wobei die äußere Schicht (15) die Vertiefungen an der Außenseite des Kerns füllt, um die glatte Innenöffnung und eine glatte Außenoberfläche vorzusehen; dadurch gekennzeichnet, daß der Kern mit in Umfangsrichtung verlaufenden Faltungen (11) ausgebildet ist, welche abwechselnd an der Innen- und der Außenseite des Kerns Vertiefungen vorsehen, daß die innere Schicht die Vertiefungen an der Innenseite des Kerns füllt, um die glatte Innenöffnung vorzusehen, und daß der Kern (10) aus einem Metall oder Kunststoff ausgebildet ist, welcher im Verhältnis zu den Kunststoffschichten relativ steif ist und welcher eine bleibende Verformung annimmt, wenn er derart gebogen wird, daß das Biegen des sich ergebenden den Kern umfassenden Verbundrohrs dazu führt, daß das Rohr eine bleibende Verformung annimmt.

2. Verbundrohr nach Anspruch 1, dadurch gekennzeichnet, daß die das Rohr kreisförmig umgebenden Faltungen (11) im wesentlichen quadratisches Profil mit abgerundeten Innen-und Außenkanten (12, 13) aufweisen.

## Revendications

1. Tube composite en trois parties ayant une lumière intérieure lisse (16) et une surface extérieure lisse (17) comprenant une âme tubulaire (10), l'âme ayant des gorges circonférentielles extérieures et ayant des couches coextrudées intérieure et extérieure (14, 15) en matière plastique, la couche extérieure (15) remplissant les gorges sur le côté extérieur de l'âme pour former la lumière intérieure lisse et une surface extérieure lisse ; caractérisé en ce que l'âme est formée de façon à avoir des circonvolutions circonférentielles (11) formant des gorges alternativement sur les côtés intérieur et extérieur de l'âme, en ce que la couche intérieure remplit les gorges sur le côté intérieur de l'âme pour former la lumière intérieure lisse et en ce que l'âme (10) est formée d'un métal ou d'une matière plastique qui est relativement rigide par rapport aux couches de matière plastique et prend une déformation permanente lorsqu'elle est pliée, de manière que le pliage du tube composite résultant contenant l'âme aboutisse à ce que le tube prenne une déformation permanente.

2. Tube composite selon la revendication 1, caractérisé en ce que les circonvolutions (11) entourant le tube sont d'un profil globalement carré ayant des angles intérieur et extérieur arrondis (12, 13).
